# EUROPEAN PATENT APPLICATION

(11) **EP 3 926 562 A1**
(43) Date of publication of application: **22.12.2021**
(21) Application number: 20755729.9
(22) Date of filing: 29.01.2020
(51) Int. Cl.: G06Q 10/08

(54) **METHODS FOR MERCHANDISE SORTING AND PACKING MANAGEMENT**

(30) Priority: 12.02.2019 JP 2019022405
(71) Applicant: Fujisawa, Kazunori, Tokyo 160-8486 (JP)
(72) Inventor: Fujisawa, Kazunori, Tokyo 160-8486 (JP)
(74) Representative: Grünecker Patent- und Rechtsanwälte PartG mbB
(86) International application number: PCT/JP2020/003255
(87) International publication number: WO 2020/166340

(57) **Abstract**

An object is to reduce cost and the like during transportation or transfer of merchandise/packages. A method for packing a customer's package, in a distribution system comprising a management server and involving transfer of the customer's package from a transfer-from distribution center to a transfer-to distribution center and delivery of the customer's package from the transfer-to distribution center to a destination or from the transfer-to distribution center to the destination via a nearest base from the destination, wherein the customer's package is associated with information on the destination at the transfer-from distribution center through the management server, for each customer related to the destination, and when the customer's package comprises a plurality of customer's packages addressed to the destination, during the transfer from a transfer-from distribution center to a transfer-to distribution center, the plurality of customer's packages addressed to the destination are packed in different packing materials according to at least shape or size.

## Description

### Technical Field

The present invention relates to a management method and the like for widely managing the shipment of products and merchandise, particularly to methods for merchandise sorting and packing management and the like in a management system for managing the sorting and packing and the like of merchandise to be shipped in the retail business and the online shopping business.

### Background Art

Conventionally, with respect to the shipment and the like of products and merchandise, there have been provided techniques for automatically sorting and automatically packing products and merchandise at distribution centers and the like.

For example, a method and the like has been proposed in which pieces of merchandise arriving at a distribution center are automatically sorted, picked, packed, and shipped accurately and rapidly according to the client's order without human intervention (Patent Literature 1).

In particular, Patent Literature 1 discloses an automatic merchandise sorting and packing method including (1) the step of assigning a merchandise number indicating the type of merchandise for a piece of merchandise arriving at a distribution center; (2) the step of automatically and sequentially supplying trays having a shape and size conforming to a predetermined standard to an automatic merchandise supply line so that the merchandise to be handled can be contained in them, and automatically putting merchandise assigned with a merchandise number in the step (1), in principle, one by one in one tray; (3) the step of automatically reading the merchandise number affixed to the merchandise before putting it in the tray or after putting it in the tray; (4) the step of automatically storing the tray containing the merchandise that has been determined to be properly assigned with a merchandise number in the automatic reading step (3), in a shelf with a large number of storage spaces tailored to the shape and size of the tray while the type of the merchandise and the address of its storage space are automatically saved in a computer so that one tray is stored in one storage space of the shelf in principle; (5) the step of taking trays containing merchandise improperly assigned with a merchandise number in the automatic reading step (3) out of the system instead of transporting it to the storage space; (6) the step of saving the request details for the merchandise for each client in the computer, and according to the saved details, automatically and sequentially taking the trays containing the merchandise stored in storage spaces of the shelf out of the storage spaces one by one and automatically transporting them to a packing location; (7) the step of taking the merchandise in the tray automatically transported to the packing location out of the tray and automatically and/or manually packing it in a packet container according to the order of the merchandise for each client, and then automatically and/or manually attaching a dispatch slip on the package and/or assigning a ship area number; and (8) the step of automatically reading the dispatch slip and/or ship area number assigned to the package and sorting it to a shipping location assigned to each shipping area with an automatic sorting apparatus and transporting it.

Another system has also been proposed which can load packages to transport carts of the sorting and shipping areas of the delivery (distribution) center in the order of display at the store of the shipping address, reduce the display work and space at each store, easily and rapidly stack packages on transport carts in delivery centers according to the store of the delivery location, weight, category, order of display, and the like, and enhance sorting and shipping workability and reduce costs (Patent Literature 2).

In particular, Patent Literature 2 discloses a merchandise sorting and shipping system in which a unit package containing the merchandise to be shipped is transported from the arrival area to the sorting and shipping area with a conveyor, the unit package is sorted according to various delivery conditions in this sorting and shipping area, and a group of sorted unit packages is loaded on a shipping cart and then shipped, wherein a buffer storage line for storing a unit package transported from the arrival area is provided on the conveyor to the sorting and shipping area.

### Citation List

### Patent Literature

Patent Literature 1: Japanese Patent Laid-Open No. 9-118312
Patent Literature 2: Japanese Patent Laid-Open No. 2001-233415

### Summary of Invention

### Technical Problem

However, since the conventional sorting and shipping at a delivery (distribution) center is basically performed for each destination (customer), small pieces of merchandise are often packed individually in a packing case, leaving a lot of wasted rooms or spaces inside the packing case during transportation. For this reason, the cost of transportation has increased, which provoked a demand for some contrivance. In other words, further improvements are expected to reduce the cost of transportation.

### Solution to Problem

The methods for merchandise sorting and packing management according to one embodiment of the present invention is a method for packing a customer's package, in a distribution system comprising a management server and involving transfer of the customer's package from a transfer-from distribution center to a transfer-to distribution center and delivery of the customer's package from the transfer-to distribution center to a destination or from the transfer-to distribution center to the destination via a nearest base from the destination, wherein the customer's package is associated with information on the destination at the transfer-from distribution center through the management server, for each customer related to the destination, and when the customer's package comprises a plurality of customer's packages addressed to the destination, during the transfer from the transfer-from distribution center to the transfer-to distribution center, the plurality of customer's packages addressed to the destination are packed in different packing cases according to at least shape or size.

Further, the customer's packages addressed to the destination and packed in the different packing cases are packed in the same packing box at the transfer-to distribution center or the nearest base from the destination.

### Advantageous Effects of Invention

The methods for merchandise sorting and packing management according to one embodiment of the present invention make it possible to reduce package rooms and package spaces during transportation for distribution. Further, this leads to suppression of an increase in cost or reduction in cost.

### Brief Description of Drawings

[Figure 1] Figure 1 is an explanatory diagram for explaining facilities, distribution channels, and the like related to a system involving methods for merchandise sorting and packing management according to one embodiment of the present invention.
[Figure 2] Figure 2 is an explanatory diagram for explaining an example of the entire configuration of the system involving the methods for merchandise sorting and packing management according to the embodiment of the present invention.
[Figure 3] Figure 3 is an explanatory diagram for explaining a functional block configuration of a management server related to the system involving the methods for merchandise sorting and packing management according to the embodiment of the present invention.
[Figure 4A] Figure 4A is an explanatory diagram for explaining an example of the appearance of an information processing device (worker's terminal as an example) related to the system involving the methods for merchandise sorting and packing management according to the embodiment of the present invention.
[Figure 4B] Figure 4B is an explanatory diagram for explaining an example of the hardware functional block configuration of an information processing device (worker's terminal as an example) related to the system involving the methods for merchandise sorting and packing management according to the embodiment of the present invention.
[Figure 5] Figure 5 is an explanatory diagram for explaining transport modes of merchandise and the like expected in the methods for merchandise sorting and packing management according to the embodiment of the present invention.
[Figure 6A] Figure 6A is a flowchart for explaining a processing flow in the system involving the methods for merchandise sorting and packing management according to the embodiment of the present invention.
[Figure 6B] Figure 6B is a flowchart for explaining a processing flow in the system involving the methods for merchandise sorting and packing management according to the embodiment of the present invention.
[Figure 7A] Figure 7A is an explanatory diagram for explaining a conventional methods for merchandise sorting and packing management.
[Figure 7B] Figure 7B is an explanatory diagram for explaining the concept of the methods for merchandise sorting and packing management according to the embodiment of the present invention.
[Figure 8A] Figure 8A is an explanatory diagram for explaining one of the variations of packing cases used in the methods for merchandise sorting and packing management according to the embodiment of the present invention.
[Figure 8B] Figure 8B is an explanatory diagram for explaining one of the variations of packing cases used in the methods for merchandise sorting and packing management according to the embodiment of the present invention.

### Description of Embodiment

Methods for merchandise sorting and packing management according to one embodiment of the present invention will be described in detail below with reference to the accompanying drawings.

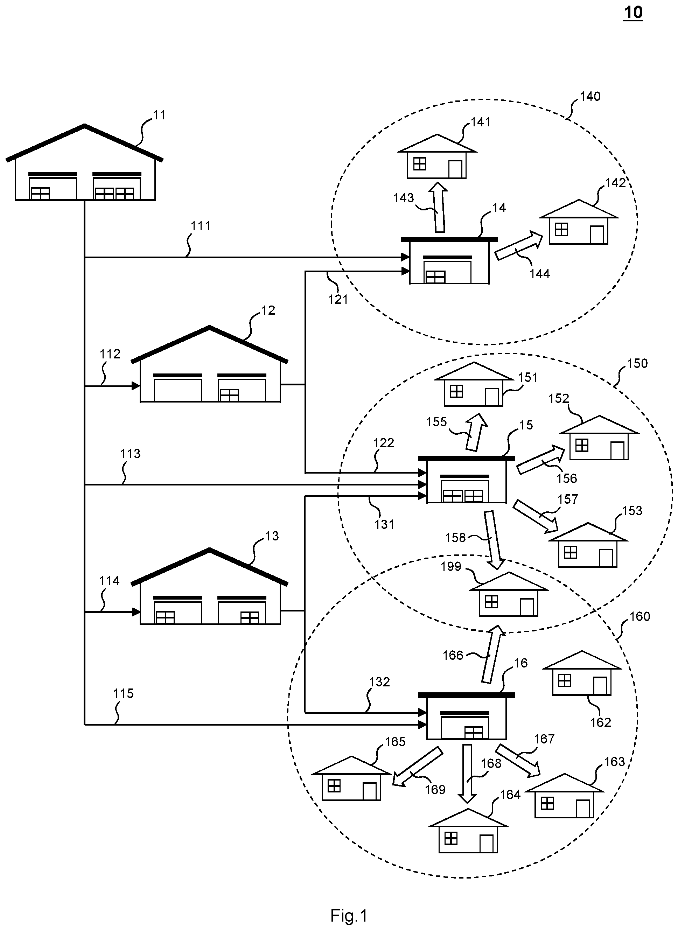

Figure 1 schematically shows facilities, distribution channels, and the like related to a system involving methods for merchandise sorting and packing management according to one embodiment of the present invention. In the drawing, a system 10 viewed from the facilities and distribution channels roughly includes distribution centers 11 to 13 and nearest bases 14 to 16 and constitutes a part of a big distribution network for delivering merchandise and the like to customer houses 141 and 142, 151 to 153, 162 to 165, and 199 by channels 143 and 144, 155 to 158, and 166 to 169.

Note that the number of distribution centers 11 to 13 and nearest bases 14 to 16 is not limited to these numbers, and may be any number of centers and spots. Hereinafter, for easy understanding of the present invention, the model shown in Figure 1 will be described for convenience.

### [Distribution Centers and Nearest Spots]

The facilities in the system according to the embodiment of the present invention are characterized by including two types of facilities: distribution centers and nearest bases, although this is not necessarily the case in the present invention. The basic concept is that nearest bases according to one embodiment of the present invention as physical spots from which delivery to customer houses can be made within a predetermined length of time are provided in addition to conventional distribution centers as distribution spots. In other words, the nearest bases are provided so that merchandises and the like can be delivered to customers in a short time.

Also, as shown in Figure 1, distribution centers may have different functions. For instance, in the drawing, the distribution center 12 has the function of delivering merchandise and the like to the nearest bases 14 and 15 through the channels 121 and 122, and the distribution center 13 has the function of delivering merchandise and the like to the nearest bases 15 and 16 through the channels 131 and 132, whereas the distribution center 11 has the function of delivering merchandise and the like to the other distribution centers 12 and 13 through the channels 112 and 114, and also to the nearest bases 14, 15, and 16 through the channels 111, 113, and 115. For instance, merchandise and the like are usually supplied to the nearest base 14 from the geographically nearby distribution center 12, but when the distribution center 12 is out of stock, the merchandise and the like are supplied from the distribution center 11 to the nearest base 14 in some cases.

Although not shown in Figure 1, a channel for delivering merchandise and the like directly from the distribution centers 11 to 13 to the customer's houses may be provided (which is not critical in this present invention and is therefore not shown in the drawings).

Moreover, in Figure 1, the nearest area 140 indicates an area to which merchandise and the like can be delivered from the nearest base 14 within a predetermined length of time (for example, 30 minutes or 1 hour), and the area schematically includes customer houses 141 and 142.

Similarly, the nearest area 150 indicates an area to which merchandise and the like can be delivered from the nearest base 15 within a predetermined length of time (for example, 30 minutes or 1 hour), and the area schematically includes customer houses 151, 152, 153, and 199. The nearest area 160 indicates an area to which merchandise and the like can be delivered from the nearest base 16 within a predetermined length of time (for example, 30 minutes or 1 hour), and the area schematically includes customer houses 162, 163, 164, 165, and 199.

Here, in the drawing, the customer's house 199 is included in both the nearest area 150 and the nearest area 160, which is shown as an example. This means that merchandise and the like can be delivered to the customer's house 199 from both the nearest base 15 and the nearest base 16 within a predetermined length of time (for example, 35 minutes from the nearest base 15 to the customer's house 199 and 40 minutes from the nearest base 16 to the customer's house 199).

### [Distribution Management]

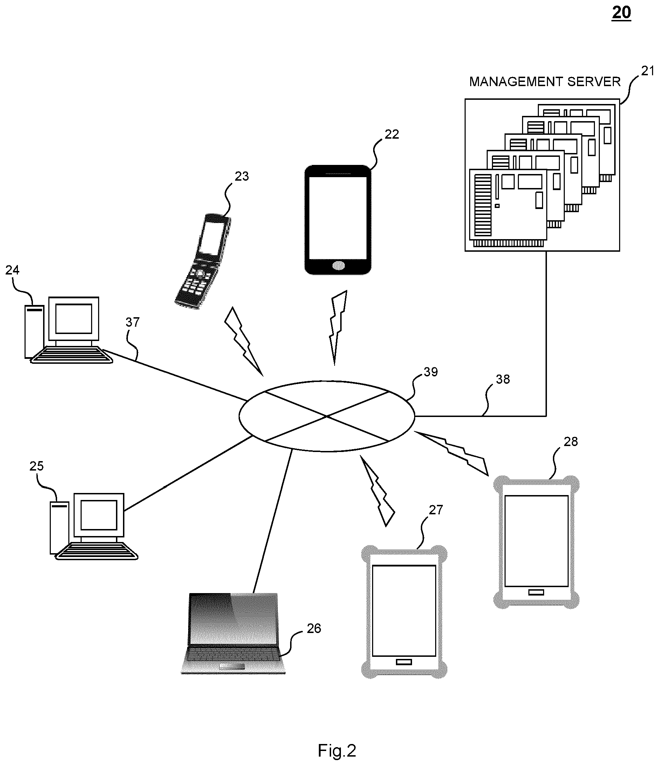

For the explanation so far, regarding the description such as "merchandise and the like can be delivered from the nearest base within a predetermined length of time" and "when it is out of stock", due to system issues, judgement can be made when the time (estimated time) required for delivery or shipping and the number of pieces of merchandise and the like in stock at the base are managed. Although an example of the overall configuration of the system involving methods for merchandise sorting and packing management according to the embodiment of the present invention will be described later with reference to Figure 2, for example, the management server in the system involving methods for merchandise sorting and packing management according to the embodiment of the present invention is installed in any of the distribution centers or nearest bases shown in Figure 1, or in a company building (not shown in the drawings), and the management server is connected to each center and each base via information terminals and a network, and the merchandise stock and the number of pieces of merchandise at each base or the like, and the status of delivery or shipping between bases or to the destination are managed moment to moment. Furthermore, the delivery time or shipping time between bases or to the destination is calculated from these actual results and the like, and the calculation is updated and managed whenever needed.

For this reason, each channel in Figure 1 is not always the only one route. For instance, the channel from the distribution center 11 to the nearest base 14 is managed by the system as 111, but one or more other routes can be saved and managed as an alternative route. The channel from the nearest base 14 to the customer house 141 is also managed by the system as 143 in the figure, but one or more other alternative routes can be saved and managed.

These alternative routes can be adopted as alternatives depending on the traffic at that time, for example, and can be designated depending on the specific delivery facility (base) or delivery means (delivery vehicle).

### [Sales Management]

The system involving methods for merchandise sorting and packing management according to the embodiment of the present invention also performs sales management of merchandise and the like. The system involving methods for merchandise sorting and packing management according to the embodiment of the present invention is also linked with POS cash registers at stores and a mail-order (electronic commerce) system (not shown in the drawings), and manages actual sales at stores and actual mail-order sales for each customer. The following databases (D1) to (D5) as databases for that purpose are included in the management server in the embodiment, and references and update requests can be made from various terminals.

### (D1) Customer Management Database

It is a database including registered entries related to customers, in which personal information, such as customer names, addresses, and telephone numbers, and ancillary information, such as points held and nearest bases, and the like are registered.

### (D2) Merchandise Management Database

It is a database including registered entries related to merchandise, in which merchandise names, merchandise codes associated with JAN codes, and the like are registered and managed.

### (D3) Stock Management Database

It is a database for managing merchandise stock for each base from which necessary tables are derived and extracted by linking with the merchandise management database as appropriate.

### (D4) Warehouse Management Database

It is a database for managing merchandise stock in warehouses such as distribution centers.

### (D5) Sales Management Database

It is an actual sales management database related to merchandise sold for each base or store.

### [Function of Nearest Base]

A nearest base has the following functions in a distribution system including the system involving methods for merchandise sorting and packing management according to one embodiment of the present invention (system operation, work by workers, such as staff members at the base, will be listed together).
(1) Store and sort target merchandise and update data for the target merchandise.
(2) Bundle pieces of merchandise for each customer in the nearest area and deliver it (to deliver bundled merchandise, bundling work and destination labeling work are performed at the nearest base).
(3) Redeliver when delivery to a customer in the nearest area was not accomplished because of the customer was absent.

In one embodiment of the present invention, delivery from the distribution center to the nearest base is carried out as a task of the same service provider, and is not outsourced to another courier or the like. For instance, target merchandise is delivered several times a day by, for example, the company's own mail in the service provider.

Meanwhile, airmail, for example, is used for delivery between distribution centers (for example, between 11 and 12 or between 11 and 13). The embodiment of the present invention is especially characterized by merchandise sorting and packing management during this transportation between distribution centers.

Figure 2 is an explanatory diagram for explaining an example of the entire configuration of the system involving the methods for merchandise sorting and packing management according to the embodiment of the present invention.

As shown in Figure 2, the system 20 according to the embodiment includes the management server 21 and various information processing devices used by users (customers), workers, delivery staff, and other people (the drawing illustrates a portable device or tablet device 22, a mobile phone 23, PCs 24 to 26, and POS terminals 27 and 28 which will hereinafter be collectively called "various terminals" or simply "terminals"). As shown in Figure 1, the management server 21 and various terminals are connected to each other so that they can communicate with each other via a private line or public line such as the Internet (37 to 39 as wired lines). The lines may be wired or wireless. In the case where they are wireless, the portable device or tablet device 22, the mobile phone 23, and the POS terminals 27 and 28 wirelessly access to the Internet 39 via a base station or access point not shown in the drawing, and are connected to the management server 21 via the line 38 so that they can interactively communicate.

Here, the access point is a wireless device for connecting wireless terminals, such as PCs and smartphones, interactively or to another network. It is typically a device that operates with the communication protocols of the first layer (physical layer) and the second layer (data link layer) in the OSI reference model.

Note that many user mobile phones and portable devices or tablets at the time of filing this application have processing capabilities (for example, communication processing speed and image processing capacity) equivalent to those of personal computers (PCs), and should be called compact computers.

In addition, programs or software necessary for implementing the present invention are usually installed or stored in the HDD or SSD in the storage unit of PCs or portable devices. When a program or software is executed, all or part of it is read as software modules in the memory in the storage unit as necessary and is subjected to operations in the CPU.

Alternatively, a browser-based computer or portable device can be adopted. In this case, a program is distributed from another server or computer to terminals as needed, and the browser on each terminal executes this program.

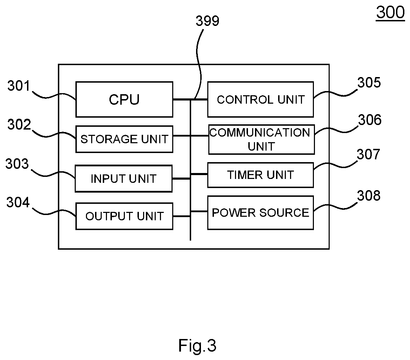

In addition, a PC can be basically used for the hardware configuration of the management server 21 (this will be described later with reference to Figure 3 just in case). The management server 21 may have a configuration suitable for processing a large amount of data by operating a plurality of PCs (for example, several tens to several tens of thousands of PCs) in parallel to increase its hardware performance as necessary, although this is not necessarily the case in the present invention.

Figure 3 is a function block diagram of the management server in a merchandise shipping management system according to the embodiment of the present invention. The operation of the management server is implemented by, for example, the individual operations of the hardware devices described below and their linked operations with the software.

In Figure 3, the management server 300 as an entire hardware block is roughly classified into a CPU 301 for performing various types of comparison/arithmetic processing, a storage unit 302, such as a RAM, a ROM, or a flash memory, an input unit 303, such as a keyboard or a pointing device, an output unit 304, such as a display or a speaker, a control unit 305 for controlling various signals, a (wireless or wired) communication (interface) unit 306, a timer unit 307 for measuring time or the like, and a power supply unit 308.

These modules are connected via a communication bus and a power supply line as needed and appropriate (in Figure 3, for convenience, the lines are collectively shown as a connection 399 in which the lines are appropriately separated).

In addition, programs or software which are executed in the management server 300 and are necessary for implementing the present invention are usually installed or stored in a hard disk drive, a solid state drive (SSD), a flash memory, or the like constituting the storage unit 302. When a program or software is executed, all or part of its software module is read in the memory in the storage unit 302 as necessary and is subjected to arithmetic operations in the CPU 301.

Note that the arithmetic operations should not necessarily be performed in the central processing unit, such as the CPU 301, and an auxiliary arithmetic unit such as a digital signal processor (DSP) (not shown in the drawing) can also be used.

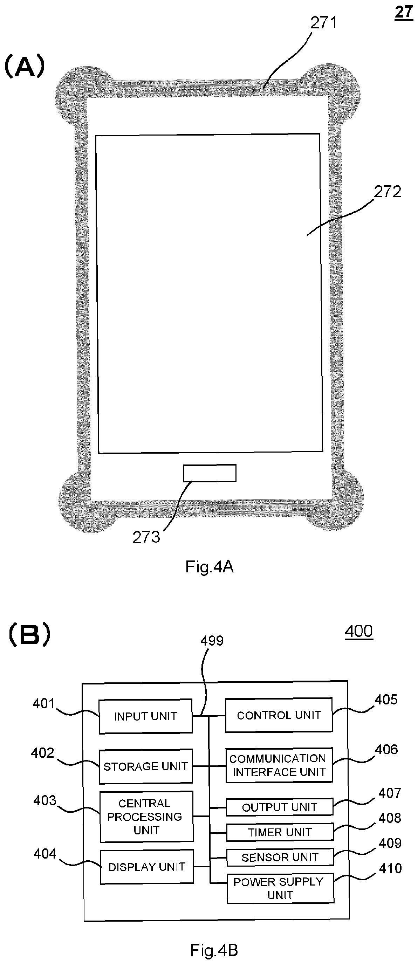

Figure 4A shows the appearance of the tablet device 27 as an information processing device in the system involving methods for merchandise sorting and packing management according to one embodiment of the present invention. In Figure 4A, the information processing device (tablet-type POS terminal) 27 includes a housing 271, a display 272, and a hardware button 273 provided in a lower central portion of the housing 271. The display 272 is typically formed of a liquid crystal display (LCD) or the like, and can display various information such as characters, still images, and videos. Menu buttons or a software keyboard is also displayed on the display 272 and touching this with a finger or a touch pen (not shown in the drawing) can give an instruction (command) to the tablet device 27. In this respect, the hardware button 273 is not an essential component but is mounted as a button having a certain function, for convenience of description of the present invention. Naturally, these hardware buttons 273 can be replaced by menu buttons displayed on a part of the display 272.

The display 272 includes a multi-touch input panel, and touch input position coordinates on the touch input panel are transmitted to a processing system (CPU) of the tablet device 27 via an input device interface (not shown in the drawing) and processed. The multi-touch input panel is configured to sense a plurality of touch points on the panel at the same time. This detection (sensor) can be implemented by various methods and is not necessarily a contact sensor, and can extract a designated point on the panel using an optical sensor, for example. Aside from that, the sensor can be not only a contact sensor or an optical sensor but a capacitance sensor that senses a contact with human skin.

Although not shown in Figure 4A, the tablet device 27 can also include a microphone or speaker. In this case, the user's voice or the like picked up from the microphone can be determined and used as an input command. Further, although not shown in Figure 4A, a camera device such as a CMOS can be mounted on, for example, the back surface of the tablet device 27.

Figure 4B illustrates a function block diagram of a piece of hardware constituting a tablet device 27 according to one embodiment of the present invention. The operation of the tablet device 27 is implemented by the individual operations of the hardware devices described below and their linked operations with the software.

In Figure 4B, the tablet device 400 as the entire hardware block is roughly classified into the hardware button 273 shown in Figure 4A, a multi-touch input panel provided on the display 272, an input unit 401 formed of a microphone or the like, a hard disk for storing programs and data, a storage unit 402 formed of a RAM and/or a ROM, a central processing unit 403 formed of a CPU that performs various numerical calculations and logical operations according to programs, a display unit 404 formed of the display 272 or the like, a control unit 405 for controlling chips, electric systems, and the like, a communication interface unit 406 formed of a slot for a access to the Internet, a port for optical communication, and a communication interface, an output unit 407 such as a speaker, vibrator, or infrared projector, a timer unit 408 for measuring time or the like, a sensor unit 409 formed of an image sensor such as CMOS, an infrared sensor, or a inertia sensor, and a power supply unit 410 for supplying power to each module in the device. These modules are connected to each other via a communication bus or a power supply line (in Figure 4B, for convenience, the lines are collectively shown as a connection 499 in which the lines are appropriately separated) as needed.

Note that the sensor unit 409 may include a GPS sensor module for identifying the position of the tablet device 400 (27). A signal detected by an image sensor such as a CMOS that constitutes the sensor unit 409, an infrared sensor, or the like can be processed as input information in the input unit 401.

In addition, programs or software which are executed in the tablet device 400 and are necessary for implementing the present invention are usually installed or stored in a hard disk drive, a solid state drive (SSD), a flash memory, or the like constituting the storage unit 402. When a program or software is executed, all or part of its software module is read in the memory in the storage unit 402 as necessary and is subjected to arithmetic operations in the CPU 403.

Note that the arithmetic operations should not necessarily be performed in the central processing unit 403, such as the CPU, and an auxiliary arithmetic unit such as a digital signal processor (DSP) (not shown in the drawing) can also be used.

### [Basic Concept of Present Invention]

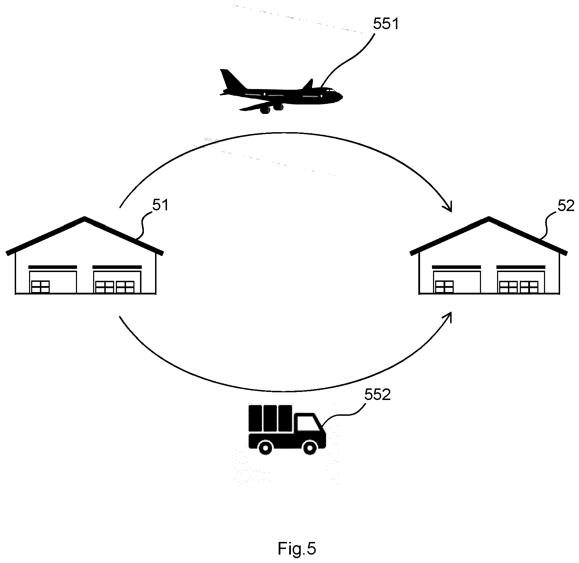

The basic concept of the present invention will now be described with reference to Figure 5. The present invention is especially characterized by merchandise sorting and/or packing management method(s) during transportation between distribution centers. In Figure 5, the distribution centers 51 and 52 correspond to the distribution centers 11 to 13. In the embodiment of the present invention, merchandise is transferred from the distribution center 51 to the distribution center 52 by an air route 551 such as an air flight or a land route 552 such as a long-distance truck. The method for sorting or packing the transferred merchandise has the following features.
(1) At the distribution center 51 which is the transfer-from location, the merchandise are not sorted or packed for each destination (customer), but are sorted or packed according to the size and shape.
(2) Packing materials (including containers, packing boxes, and other packing cases, and also cartons, cushioning materials, plastic bags, and packing bags. For easy understanding, in the embodiment of the present invention, "packing case" is used in some cases as a representative of these) packed in (1) can contain not only goods to transport such as merchandise handled by the company but also goods to transport such as merchandise and packages undertaken from other companies.
(3) Merchandise or packages are individually associated with a destination (customer) for sorting and packing described in (1) and (2).
(4) At the distribution center 52 to which they are transferred, they are repacked in packing boxes or the like for each destination (customer).
(5) In (1) to (4), automatic processing based on the management in the management server is executed as appropriate.

Although the basic concept of the present invention has been described with reference to Figure 5 for easy understanding, this is not necessarily the case in the present invention, and the repacking in (4) may be performed at a nearest base (for example, 14 to 16 in Figure 1).

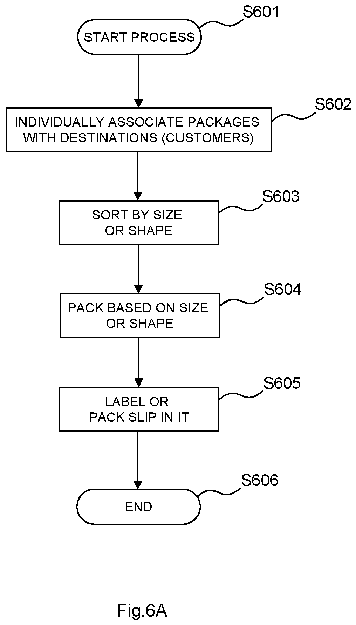

Figure 6A shows a picking process flow at a transfer-from distribution center (for example, 11 in Figure 1 and 51 in Figure 5) in the system involving methods for merchandise sorting and packing management according to the embodiment of the present invention.

Upon start of the picking process in Step S601 as shown in Figure 6A, the process proceeds to Step S602 where an association process is performed to individually associate packages to be transferred, with a destination (customer). For example, in the association process, a merchandise code and information such as destination (customer) address are associated with each other.

Note that automatic picking (robot picking) with a conventional picking system can be adopted for picking packages to be transferred, although this is not necessarily the case in the present invention.

Next, the process proceeds to Step S603, and a sorting process is performed based on the size or shape of each package to be transferred. A recognition system (not shown in the drawing) in the merchandise shipping management system according to the embodiment of the present invention can be used for determining the size and shape of each package. Also, a known automatic packing system (not shown in the drawing) can be used for the packing process.

What is important here is that the sorting work at the transfer-from distribution center is based on the size and shape of each package, not on each destination (customer). As a result, merchandise/packages to a plurality of destinations (customers) are mixed in a packing case. Furthermore, not only goods to transport such as merchandise handled by the company but also goods to transport undertaken from other companies can be bundled. As described above, this would not bring confusion since the management server has associated each package with the corresponding destination (customer).

In Step S604, a process for packing into a packing case based on sorting information obtained by sorting in the previous step is performed.

In Step S605, labeling is performed for each packing case. To be specific, a label printed with a two-dimensional code, an IC tag, or the like is affixed to each packing case. Alternatively, instead of labeling, a slip may be included in each packing case in the same step.

These labels and slips contain at least merchandise/package information packed in packing cases. Furthermore, these labels and slips can also include destination (customer) information on individual merchandise/packages, but the destinations (customers) are managed by the management server via merchandise/package information.

The process then proceeds to Step S606 where the flow ends.

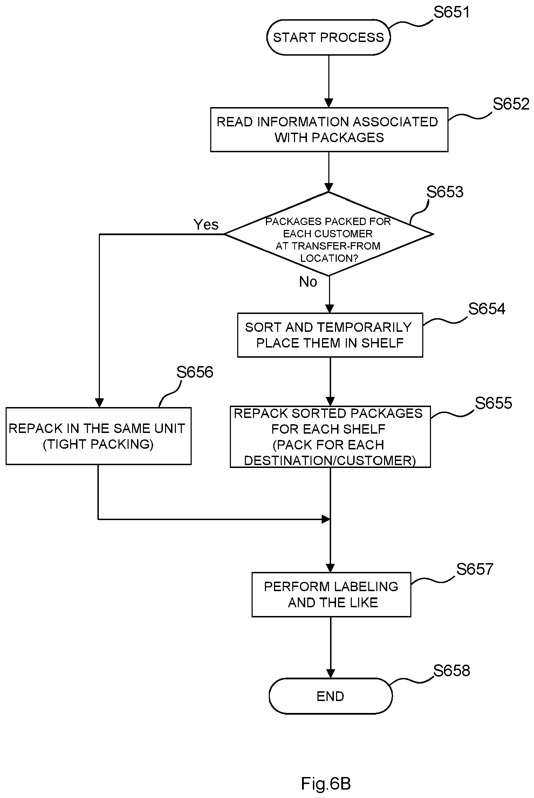

Figure 6B shows a repacking process flow at the transfer-to distribution centers (for example, 12 and 13 in Figure 1, and 52 in Figure 5) related to the system involving methods for merchandise sorting and packing management according to one embodiment of the present invention.

Upon start of the repacking process in Step S651 in Figure 6B, the process proceeds to Step S652 where the information associated with a package is read. In the embodiment of the present invention, this reading is done from a label or the like affixed to the packing case.

Next, the process proceeds to Step S653 where whether or not the merchandise/objects in the packing case are packages packed for each customer is determined. Basically, in the system involving methods for merchandise sorting and packing management according to one embodiment of the present invention, the merchandise/package in the packing case should not necessarily be packed for each customer, but since the merchandise/packages in the packing case can be all addressed to the same destination (customer) for transportation efficiency, the determination is made in this respect.

If Yes according to the determination in Step S653, the process proceeds to Step S656, and repacking is done in the same unit. For this repacking, packing that takes into account delivery to the destination (customer) without fixtures (not shown in the drawing) that were used between distribution centers (for example, the packing box is filled with more cushioning material) can be adopted.

If No according to the determination in Step S653, the process proceeds to Step S654.

In Step S654, the merchandise/packages in the packing case are taken out and sorted by destination (customer). They are then temporarily placed on a predetermined shelf or space, although this is not necessarily the case in the present invention. This step can be automated by a conventional robot or the like.

Next, the process proceeds to Step S655 where a process for repacking the merchandise/packages that were sorted in the previous step to each shelf is performed. In the embodiment, this is a packing process for each destination (customer). This step can also be automated by a conventional robot or the like.

In Step S657, labeling is performed by the unit of packing box. In particular, a label and/or a slip printed with a two-dimensional code is affixed to each packing box. The label and/or slip contains at least the destination (customer) information on the merchandise/packages packed in the packing box. These destination (customer) information can be managed by the management server.

Then, the process proceeds to Step S658 and the flow ends.

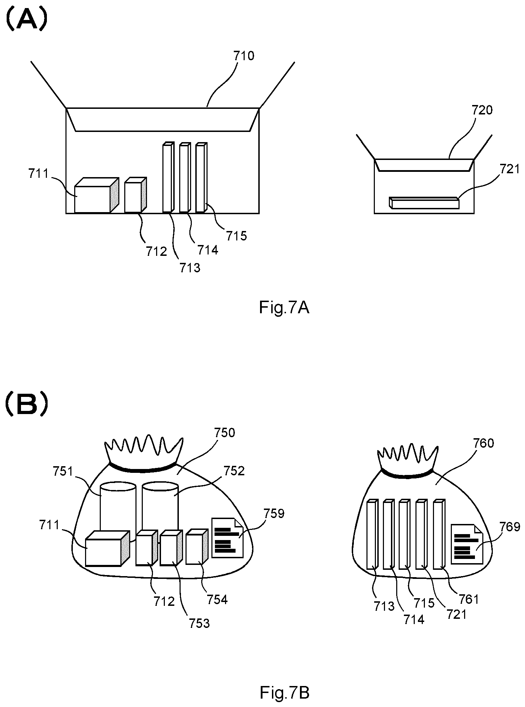

The concept of the methods for merchandise sorting and packing management according to the embodiment of the present invention will now be explained with reference to Figure 7A and 7B. Figure 7A shows a conventional merchandise sorting and packing mode, and Figure 7B shows a merchandise sorting and packing mode according to the embodiment of the present invention.

In Figure 7A, the conventional packing case 710 is packed with merchandise/packages 711 to 715 to be delivered to a destination (customer) A. The conventional packing case 720 is packed with merchandise/package 721 to be delivered to a destination (customer) B. In other words, the conventional merchandise sorting/packing method is performed for each destination (customer), and the related management on the server is also based on this.

On the other hand, in Figure 7B, the packing case 750 used in the methods for merchandise sorting and packing management according to the embodiment of the present invention include the merchandise/packages 711 and 712 to be delivered to the destination (customer) A and also merchandise/packages 751 to 754 to be delivered to others. Further, if necessary, a slip 759 containing at least merchandise/package information packed in the packing case 750 may be included.

In Figure 7B, the packing case 760 used in the methods for merchandise sorting and packing management according to the embodiment of the present invention include the merchandise/packages 713 to 715 to be delivered to the destination (customer) A, merchandise/package 721 to be delivered to the destination (customer) B, and merchandise/package 761 to be delivered to others. Further, if necessary, a slip 769 containing at least merchandise/package information packed in the packing case 750 may be included.

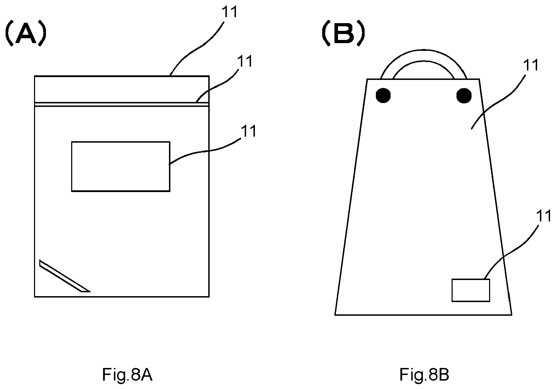

Figure 8A and 8B show variations of packing cases used in the methods for merchandise sorting and packing management according to the embodiment of the present invention. Packing cases according to the embodiment of the present invention do not necessarily have to be box-shaped, and may be bag-shaped as long as they have a certain level of strength. If the protection of merchandise/packages being transported can be guaranteed by other protective members, protective equipment, or the like, the strength of the bags does not matter.

Although not shown, known packing materials can be widely adopted as variations of the packing cases. For easy understanding of the present invention, it will hereinafter be assumed that packing cases are used.

Figure 8A shows a variation 810 of packing case. The packing case 810 is a flexible bag, and includes a labeling area (or a label itself) 811 and an openable/closable zipper or fastener 812.

Figure 8B shows another variation 820 of packing case. The packing case 820 is a handbag-like bag, and includes a labeling area (or a label itself) 821. An openable/closable button, zipper, or fastener (not shown) may also be provided.

The embodiment of a system involving methods for merchandise sorting and packing management according to one embodiment of the present invention and the like have been described above based on specific examples; however, another embodiment of the present invention can be, besides a method or program for implementing the system or device, a storage medium containing the program (for example, an optical disk, a magneto-optical disk, a CD-ROM, a CD-R, a CD-RW, a magnetic tape, a hard disk, or a memory card).

The program implementation mode is not limited to an application program such as an object code compiled by an compiler or a program code executed by an interpreter, and may be, for example, a program module incorporated in the operating system.

As for the program, not all the processing is executed only in the CPU on the control board, and if necessary, a part or all of it may be executed by another processing unit (for example, DSP) mounted on the extension board or the extension unit added to the board.

As for all components described herein (including claims, abstract, and drawings) and/or for all steps of all disclosed methods or processing, these features can be used in any combination that is not mutually exclusive.

Each of the features described herein (including claims, abstract, and drawings) can be replaced with an alternative feature that serves for the same purpose, equivalent purpose, or similar purpose, unless expressly denied. Therefore, unless explicitly denied, each of the disclosed features is merely an example of a comprehensive set of same or equal features.

The present invention is not limited to any specific configuration of the aforementioned embodiments. The present invention can be extended to all novel features disclosed herein (including claims, abstracts, and drawings) or combinations thereof, or all novel methods or processing steps disclosed herein or combinations thereof.

### Reference Signs List

10 System (as part of distribution system)
11-13 Distribution center
14-16 Nearest base
141-142, 151-153, 162-165, 199 Customer house
20 System (as part of management system)
21 Management Server
22 Tablet device (one mode of user terminal device)
23 Mobile phone (one mode of user terminal device)
24-26 PC (one mode of user terminal device or base terminal)
27-28 POS terminal (one mode of base terminal or worker terminal)
37, 38 Communication line
39 Public line (e.g., private line or Internet)

## Claims

1. A method for packing a customer's package, in a distribution system comprising a management server and involving transfer of the customer's package from a transfer-from distribution center to a transfer-to distribution center and delivery of the customer's package from the transfer-to distribution center to a destination or from the transfer-to distribution center to the destination via a nearest base from the destination, wherein
the customer's package is associated with information on the destination at the transfer-from distribution center through the management server, for each customer related to the destination, and
when the customer's package comprises a plurality of customer's packages addressed to the destination, during the transfer from the transfer-from distribution center to the transfer-to distribution center, the plurality of customer's packages addressed to the destination are packed in different packing materials according to at least shape or size.

2. The method according to Claim 1, wherein the customer's packages addressed to the destination and packed in the different packing materials are packed in the same packing material at the transfer-to distribution center or the nearest base from the destination.

3. The method according to Claim 1 or 2, wherein at least one of the packing materials includes the customer's package together with a package temporarily undertaken from another company.

4. A method for packing a customer's package, in a distribution system comprising a management server and involving transfer of the customer's package from a transfer-from distribution center to a transfer-to distribution center and delivery of the customer's package from the transfer-to distribution center to a destination or from the transfer-to distribution center to the destination via a nearest base from the destination, wherein
the customer's package is associated with information on the destination at the transfer-from distribution center through the management server, for each customer related to the destination, and
when the customer's package comprises a plurality of customer's packages addressed to the destination, during the transfer from the transfer-from distribution center to the transfer-to distribution center, the plurality of customer's packages addressed to the destination are bundled in a bag together with a label or slip containing the associated information and the bag is packed in a packing material.

5. The method according to Claim 4, wherein the bag is a plastic bag.

6. The method according to Claim 4 or 5, wherein the slip is affixed to the bag.
